# EUROPÄISCHE PATENTSCHRIFT

(11) **EP 3 173 765 B1**
(45) Veröffentlichungstag und Bekanntmachung des Hinweises auf die Patenterteilung: **01.03.2023**
(21) Anmeldenummer: 16200432.9
(22) Anmeldetag: 24.11.2016
(51) Int. Cl.: G01N 3/08, G01N 3/04

(54) **FASERVERBUNDWERKSTOFF-ZUGPROBE, DEMENTSPRECHENDES VERFAHREN ZUM HERSTELLEN UND VERFAHREN ZUM DURCHFÜHRUNG EINES ZUGVERSUCHS.**
FIBER COMPOSITE TENSILE SAMPLE, PROCEDURE TO MANUFACTURE AND METHOD FOR PERFORMING A TENSILE TEST.
ÉPROUVETTE DE TRACTION COMPOSITE DE FIBRES, PROCÉDÉ DE FABRICATION ET PROCÉDÉ POUR RÉALISER UN ESSAI DE TRACTION

(30) Priorität: 26.11.2015 DE 102015223404
(43) Veröffentlichungstag der Anmeldung: 31.05.2017
(73) Patentinhaber: Airbus Defence and Space GmbH, 82024 Taufkirchen (DE)
(72) Erfinder: Starke, Peter, 85521 Ottobrunn (DE); Kraft, Harald, 76316 Malsch (DE); Holzapfel, Martin, 70563 Stuttgart (DE); Brodbeck, Marcel, 70563 Stuttgart (DE)
(74) Vertreter: Isarpatent

(56) Entgegenhaltungen:
- DE-A1- 4 134 743
- GB-A- 2 279 085
- JP-A- H03 174 077
- US-A1- 2009 007 692
- US-A1- 2015 151 948

## Beschreibung

Die vorliegende Erfindung betrifft eine Faserverbundwerkstoff-Zugprobe, ein Verfahren zum Herstellen einer Faserverbundwerkstoff-Zugprobe, sowie ein Verfahren zur Durchführung eines Zugversuchs.

Obwohl auf beliebige Arten von Zugversuchen anwendbar, werden die vorliegende Erfindung sowie die ihr zugrunde liegende Problematik in Bezug auf Hochgeschwindigkeits-Zugversuche mit Faserverbund-Zugproben näher erläutert.

Bisweilen existieren für Hochgeschwindigkeits-Zugversuche vorwiegend für metallische Zugproben geeignete Einspannkonzepte. Derartige Ansätze sind beispielsweise in der FAT-Schriftenreihe Nr. 211 der Forschungsvereinigung Automobiltechnik e. V. mit dem Titel "Dynamische Werkstoffkennwerte für die Crashsimulation", AiF Nr. 14205, beschrieben.

Demnach werden beispielsweise sogenannte Parallelspannköpfe eingesetzt, bei welchen eine Zugprobe in Parallel-Klemmbacken mit einer Vorspannkraft eingespannt wird.

Ferner existieren sogenannte "schnelle Beißer" bei welchen die Parallel-Klemmbacken erst nach einer Beschleunigungsstrecke zugreifen, wobei sich Zähne der Spannbacken in die Probe eingraben, was eine metallisch duktile Oberfläche der Probe erfordert.

Darüber hinaus existieren Ansätze, wobei Metallkeile, sogenannte Aufleimer, auf eine flache und gerade Probe aus Faserverbundwerkstoff aufgeschraubt oder aufgeklebt und gegebenenfalls zusätzlich verbolzt oder vernietet werden. Die Metallkeile wirken beim Zugversuch mit korrespondierenden Spannbacken zusammen.

Druckschrift JPH03174077A offenbart eine Seilzugprobe wobei das Fasermaterial in dem Krafteinleitungsabschnitt zumindest teilweise entlang einer schräg zu der Zugbelastungsrichtung ausgerichteten Fläche verläuft. Druckschrift US 2009/007692 A1 offenbart eine Faserverbundwerkstoff-Zugprobe.

Es ist Aufgabe der vorliegenden Erfindung ein verbessertes Einspannkonzept für Faserverbundwerkstoff-Zugproben, bereitzustellen.

Erfindungsgemäß wird diese Aufgabe durch eine Faserverbundwerkstoff-Zugprobe mit den Merkmalen des Patentanspruchs 1 und/oder ein Verfahren zum Herstellen einer Zugprobe mit den Merkmalen des Patentanspruchs 9 und/oder eine Vorrichtung zur Durchführung eines Zugversuchs mit den Merkmalen des Patentanspruchs 12 und/oder ein Verfahren zur Durchführung eines Zugversuchs mit den Merkmalen des Patentanspruchs 14 gelöst.

Die der vorliegenden Erfindung zugrunde liegende Idee besteht darin, dass Faserverbu ndwerkstoff-Zugprobe, bereits bei Ihrem Urformen bzw. bei Ihrer Herstellung zur Gestaltung der Krafteinleitung in die Zugprobe in ihrem Krafteinleitungsabschnitt mit einem schräg zur Zugbelastungsrichtung verlaufenden Faserabschnitt versehen wird, um bei einem Zugversuch mittels Formschluss ein Durchrutschen zu verhindern. Dabei entstehende, auf das Fasermaterial wirkende Normalkraftkomponenten drücken die Zugprobe lokal zusammen und verhindern so vorteilhaft eine Delamination im Bereich eines Übergangs vom Krafteinleitungsabschnitt zum Prüfabschnitt, insbesondere wenn bei einem Hochgeschwindigkeits-Zugversuch die Zugkraft sehr schnell eingeleitet wird.

Die schräge Fläche, entlang welcher das Fasermaterial verläuft, kann insbesondere mittels eines Einlegers definiert sein. Dieser wird bei der Herstellung einer Faserverbundwerkstoff-Zugprobe mit in eine Matrix, mit der das Fasermaterial vor dem Aushärten getränkt wird, eingebettet.

Das Fasermaterial ist in einem Prüfabschnitt der Zugprobe gerade angeordnet. Es kann sich um ein im Prüfabschnitt unidirektionales Fasermaterial handeln, welches erst am Übergang zum Krafteinleitungsabschnitt in eine schräg zur Zugbelastungsrichtung verlaufende Richtung gebogen ist.

Vorteilhaft werden erfindungsgemäß keine Vorspannungen in Querrichtung benötigt, wodurch Quetschen oder Scherbelastungen des Fasermaterials minimiert werden. In Querrichtung wirkt stattdessen lediglich die aus der Zugkraft resultierende und dazu, zumindest näherungsweise, proportionale Normalkraftkomponente auf die Faserverbundwerkstoff-Zugprobe.

Unerwünschte Spannungen im Bereich der Einspannung, insbesondere im Bereich des Beginns der Einspannung, und/oder der Krafteinleitung werden daher vermindert. Somit ist gewährleistet, dass die Faserverbundwerkstoff-Zugprobe im repräsentativen Prüfabschnitt und nicht im Krafteinleitungsabschnitt versagt.

Des Weiteren kann vorteilhaft eine deutlich höhere Belastbarkeit als mit Aufleimern und/oder einer Verbolzung/Vernietung erreicht werden, da kein Ansatz oder Keim für eine Oberflächen-Ablösung und/oder eine Lochleibung vorhanden ist.

Zudem ist ein Hochgeschwindigkeits-Zugversuch problemlos umsetzbar, da sich der keilförmige Krafteinleitungsabschnitt nach einer Beschleunigungsphase automatisch zentriert und gedämpft in eine Aufnahme einkoppelt. Ein Prellen und/oder Überschwingen beim Eingriff wird zudem vorteilhaft abgedämpft bzw. ist nahezu vermieden. Es wird eine nahezu prellfreie Krafteinkopplung erreicht.

Vorteilhaft können somit Werkstoffkennwerte, wie beispielsweise der E-Modul, die Bruchdehnung oder die Bruchfestigkeit, reproduzierbar auch bei hoher Prüfgeschwindigkeit ermittelt werden.

Eine Vorrichtung zur Durchführung des Zugversuchs wird erfindungsgemäß mit einer schräg zu der Zugprüfrichtung verlaufenden Kraftübertragungsfläche gebildet, wobei der Probe- bzw. Probenaufnahmekörper, welcher eine Probe oder mehrere Proben aufnehmen kann, länger als ein Krafteinleitungsabschnitt der Zugprobe ausgebildet ist, um die Zugprobe im Bereich eines Übergangs zwischen dem Krafteinleitungsabschnitt und einem Prüfabschnitt mit einer aus der Zugkraft resultierenden Normalkraft zu beaufschlagen.

Zum Erzeugen der Zugkraft kann die Vorrichtung für Hochgeschwindigkeits-Zugversuche beispielsweise einen servohydraulischen Antrieb mit einer Beschleunigungsstrecke, ein Fallgewicht oder ein auf andere Weise, insbesondere mittels eines Druckluftzylinders, beschleunigtes Gewicht aufweisen.

Für die Übertragung der Zug- und Normalkraft ist vorzugsweise ein Aufleger vorgesehen, der zwischen Faserverbundwerkstoff-Zugprobe und Kraftübertragungsfläche des Probenaufnahmekörpers angeordnet ist. Dieser kann an die Faserverbundwerkstoff-Zugprobe angebracht oder angeformt sein. Zusätzlich wäre es auch denkbar, einen weiteren Aufleger an dem Probenaufnahmekörper der Vorrichtung anzubringen oder anzuformen. Ferner wäre es denkbar, den Probenaufnahmekörper selbst derart zu formen, dass er direkt entlang des Fasermaterials verläuft und der Form der Zugprobe folgt, insbesondere auch im Bereich des Übergangs. Somit könnte der Probenaufnahmekörper die Form eines Auflegers mit aufweisen und zumindest teilweise dessen Funktion des Bereitstellens einer Normalkraft auf den Übergang zwischen Prüfabschnitt und Krafteinleitungsabschnitt mit erfüllen

Bei einem erfindungsgemäßen Verfahren wird die Zugkraft entsprechend über zur Zugrichtung schräg verlaufende Kraftübertragungsflächen der Vorrichtung und korrespondierende Krafteinleitungsflächen der Zugprobe aufgebracht. Somit resultiert aus der Zugkraft eine auf die Faserverbundwerkstoff-Zugprobe wirkende Normalkraft. Diese Normalkraft wird mittels des in die Faserverbundwerkstoff-Zugprobe im Bereich eines Krafteinleitungsabschnitts eingebetteten Einlegers abgestützt. Insbesondere beträgt die Normalkraft abhängig vom Anstellwinkel der Kraftübertragungsfläche eine Höhe, die (näherungsweise) proportional zur Zugkraft ist.

In den Unteransprüchen finden sich vorteilhafte Ausgestaltungen und Verbesserungen der Erfindung.

Gemäß einer bevorzugten Weiterbildung der Faserverbundwerkstoff-Zugprobe weist der Krafteinleitungsabschnitt einen in das Fasermaterial eingebetteten Einleger auf. Insbesondere ist der Einleger gemeinsam mit dem Fasermaterial in eine Matrix, insbesondere eine Harzmatrix, eingebettet. Das Einbetten erfolgt vorzugsweise bereits beim Urformen der Faserverbundwerkstoff-Zugprobe.

Vorteilhaft kann mittels des Einlegers und eines formgebendes Werkzeugs ein beidseitig definierter Verlauf des Fasermaterials hergestellt werden. Ferner wird durch den fest eingebetteten Einleger eine sehr stabile Formänderung bzw. Aufweitung der Faserverbundwerkstoff-Zugprobe erreicht, insbesondere stabiler als bei einem außen aufgeklebten Aufleimer, sodass ein Durchrutschen der Faserverbundwerkstoff-Zugprobe bei einem Zugversuch wirksam durch Formschluss verhindert wird. Der Einleger kann beispielsweise aus einem Polymer oder aus einem Metall gebildet sein. Auch eine Ausbildung des Einlegers mit einem gleichen Material wie die Matrix ist denkbar. Über den Einleger werden auf die Faserverbundwerkstoff-Zugprobe wirkende Normalkräfte abgestützt.

Gemäß einer vorteilhaften Weiterbildung ist der Einleger keilförmig, insbesondere symmetrisch keilförmig, ausgebildet. Somit ist eine schräge Fläche bereitgestellt, entlang welcher das Fasermaterial verläuft. Vorteilhaft ist so eine gleichmäßige Krafteinleitung in das Fasermaterial ermöglicht. Bei einer weiteren Ausführungsform wäre es denkbar, den Einleger mit einer anderen zulaufenden Form, beispielsweise pyramidenförmig, auszubilden. Ferner wäre, beispielsweise bei einer Rundzugprobe, auch denkbar, eine Ausbildung des Einlegers als Kegel vorzusehen. Gemäß einer weiteren bevorzugten Ausführungsform spaltet der Einleger das Fasermaterial im Bereich des Krafteinleitungsabschnitts in zumindest zwei Stränge auf, welche entlang unterschiedlicher Seiten des Einlegers verlaufen. Vorteilhaft kann so eine beidseitig symmetrische Krafteinleitung in das Fasermaterial erfolgen. Es kann sich auch um eine Aufspaltung in mehr als zwei Stränge handeln. Beispielsweise kann im Fall eines als vierseitige Pyramide ausgebildeten Einlegers eine Aufspaltung in vier Stränge vorgesehen sein. Des Weiteren wäre im Fall einer kegelförmigen Ausbildung des Einlegers eine umlaufende Aufspaltung in eine Vielzahl von Stränge entlang der Kegelmantelfläche denkbar. Insbesondere ist eine Aufspaltung in eine Anzahl von Strängen möglich, welche der Anzahl von Faserfilamenten des Fasermaterials entspricht.

Gemäß einer vorteilhaften Ausführungsform ist im Bereich eines Übergangs von dem Prüfabschnitt zu dem Krafteinleitungsabschnitt ein außenliegender Aufleger vorgesehen, welcher an seiner Innenseite entlang des Fasermaterials verläuft und an seiner Außenseite eine Krafteinleitungsfläche für eine Krafteinleitung einer Probenaufnahme ausbildet. Bei einem Fasermaterial mit unidirektionalen Fasern im Prüfabschnitt verläuft der Aufleger vorzugsweise parallel zur Faserrichtung. Der Aufleger sorgt vorteilhaft für die Einleitung einer Normalkraftkomponente der Zugkraft in den Übergangsbereich. Insbesondere in einem Zwickelbereich, an dem sich Faserstränge an dem Ende des Einlegers teilen, wird so eine Delamination wirksam verhindert. Somit wird sichergestellt, dass die Probe im Prüfabschnitt und nicht im Krafteinleitungsabschnitt oder in dem Übergangsbereich versagt. Ferner ermöglicht der Aufleger vorteilhaft auch eine außenseitige flexible Anpassung der Geometrie der Faserverbundwerkstoff-Zugprobe an einen Probenaufnahmekörper einer Vorrichtung zur Durchführung eines Zugversuchs.

Gemäß einer bevorzugten Ausführungsform erstreckt sich die Krafteinleitungsfläche des Auflegers von dem Krafteinleitungsabschnitt über den Übergang hinweg bis teilweise in den Prüfabschnitt. Somit wird sichergestellt, dass die Normalkraft bei einem Zugversuch im Bereich des Übergangs anliegt. Optional oder zusätzlich verläuft die Krafteinleitungsfläche schräg zur Zugbelastungsrichtung. Bei einer weiteren Ausführung, welche insbesondere für quasistatische Zugversuche geeignet wäre, ist auch ein Verlauf der Krafteinleitungsfläche parallel zur Zugbelastungsrichtung denkbar. In diesem Fall wäre insbesondere eine vorab abzuschätzende Normalkraft mittels einer Vorspannung eines Probenaufnahmekörpers einer Vorrichtung zur Durchführung des Zugversuchs vorgesehen.

Gemäß einer vorteilhaften Weiterbildung ist beidseitig an der Faserverbundwerkstoff-Zugprobe je ein Aufleger angeordnet. Der Krafteinleitungsabschnitt bildet dabei gemeinsam mit den Auflegern eine Keilform, insbesondere eine symmetrische Keilform, aus. Somit ist eine symmetrische Ausbildung bereitgestellt, welche vorteilhaft eine symmetrische und gleichmäßige Krafteinleitung ermöglicht und ein Durchrutschen wirksam verhindert.

Gemäß einer Ausführungsform enthält der Aufleger einen dämpfenden Werkstoff, insbesondere ein dämpfendes Polymer, vorzugsweise Polyvinylchlorid (PVC) oder Polyamid (PA). Es kann sich bei dem Polymer auch um ein zähes Harz oder ein thermoplastisches Elastomer handeln. Alternativ oder zusätzlich kann es sich um einen zur Dämpfung gewollt plastisch oder quasi-plastisch verformenden Werkstoff handeln. Mittels des dämpfenden Werkstoffs werden, insbesondere bei Hochgeschwindigkeitszugversuchen, durch das Angreifen eines Probenaufnahmekörpers einer Zugprüfvorrichtung angeregte Schwingungen wirksam gedämpft.

Bei weiteren Ausführungsformen können auch metallische Aufleger vorgesehen sein. Bei einer Ausführung enthält der Aufleger ein duktiles Metall. In diesem Fall ist eine Verwendung paralleler Spannbacken, insbesondere mit einer Riffelung, denkbar. Eine Dämpfung kann hier durch plastische Verformung beim Eingreifen einer eines Probenaufnahmekörpers, insbesondere einer geriffelten Spannbacke, in das duktile Metall erreicht werden. Bei einer weiteren Ausführung wäre es denkbar, den Aufleger bereits als Probenaufnahmekörper zur direkten Anbindung an eine Vorrichtung zur Durchführung eines Zugversuchs auszubilden. In diesem Fall könnten beispielsweise die beiden Aufleger hinter dem Ende der Zugprobe miteinander verbunden oder verbindbar sein und ein Anbindungsabschnitt zur Befestigung an einer Vorrichtung zur Durchführung eines Zugversuchs aufweisen. Beispielsweise könnte ein Anbindungsabschnitt als Gewinde zum Anschrauben an eine Vorrichtung zur Durchführung eines Zugversuchs ausgebildet sein.

Bei einer Ausführungsform des Verfahrens zur Herstellung einer Faserverbundwerkstoff-Zugprobe wird an einer ersten Werkzeughälfte des formgebenden Werkzeugs ein erster Strang mit Fasermaterial und an einer zweiten Werkzeughälfte des formgebenden Werkzeugs ein zweiter Strang mit Fasermaterial eingelegt, wobei der Einleger zwischen den ersten Strang und den zweiten Strang eingelegt wird. Somit definiert der Einleger beidseitig eine schräge Fläche für die schrägen Faserabschnitte. Der Einleger ist bei einer bevorzugten Ausführung symmetrisch keilförmig ausgebildet, sodass eine symmetrisch ausgebildete Zugprobe hergestellt wird.

Gemäß einer Weiterbildung ist ein Schritt des Ausbildens oder Anfügens eines äu-βeren Auflegers vorgesehen ist, wobei der Aufleger an einer Außenseite des Faserverbundbauteils im Bereich des Übergangs zwischen dem geraden Faserabschnitt und dem schrägen Faserabschnitt angeordnet wird. Der Aufleger kann dazu beispielsweise vor dem Einlegen des Strangs in das Werkzeug eingelegt und anschließend mit eingebettet werden, nach dem Aushärten aufgeklebt werden oder an das Faserverbundbauteil angegossen werden, insbesondere als reiner Matrixabschnitt. Vorteilhaft wird der Aufleger somit beim Herstellen der Zugprobe mit ausgebildet. Vorzugsweise wird an beiden Seiten der Zugprobe ein Aufleger ausgebildet oder angeformt.

Gemäß einer Ausführungsform der Vorrichtung zur Durchführung eines Zugversuchs ist der Probenaufnahmekörper zur Kraftübertragung auf einen Aufleger ausgebildet, welcher außen an der Zugprobe angebracht oder angeformt ist und über den Übergang hinweg verläuft. Vorteilhaft wirkt bei der Kraftübertragung so eine Normalkraftkomponente auf den Übergangsbereich.

Bei einer weiteren Ausführungsform kann der Probenaufnahmekörper selbst im Bereich des Übergangs zwischen Krafteinleitungsabschnitt und Prüfabschnitt direkt entlang dem Fasermaterial, insbesondere in Faserrichtung, verlaufen.

Gemäß einer Ausführungsform des Verfahrens zur Durchführung eines Zugversuchs wird im Bereich eines zulaufenden Endes des Einlegers, insbesondere an einem Übergang von dem Krafteinleitungsabschnitt zu einem Prüfabschnitt der Faserverbundwerkstoff-Zugprobe, eine auf die Zugprobe wirkende Normalkraft aufgebracht. Insbesondere wird die Normalkraft über einen im Bereich des Übergangs außen an der Zugprobe vorgesehenen Aufleger aufgebracht, der die Krafteinleitungsfläche bildet.

Die obigen Ausgestaltungen und Weiterbildungen lassen sich, sofern sinnvoll, beliebig miteinander kombinieren. Insbesondere sind Merkmale der Faserverbundwerkstoff- Zugprobe auf das Verfahren zur Herstellung der Faserverbundwerkstoff-Zugprobe übertragbar, und umgekehrt. Ferner sind Merkmale der Vorrichtung zur Durchführung eines Zugversuchs auf das Verfahren zur Durchführung des Zugversuchs übertragbar, und umgekehrt. Ferner sind Merkmale der Faserverbundwerkstoff-Zugprobe sowie Merkmale der Vorrichtung zur Durchführung eines Zugversuchs auf eine Versuchsanordnung zur Durchführung eines Zugversuchs mit einer solchen Vorrichtung und einer solchen Zugprobe übertragbar.

Die Erfindung wird im Folgenden anhand von Ausführungsbeispielen unter Bezugnahme auf die beiliegenden Figuren der Zeichnung näher erläutert. Die Elemente der Zeichnungen sind nicht notwendigerweise maßstabsgetreu zueinander gezeigt. Von den Figuren zeigen:
- Fig. 1: eine schematische Darstellung eines Ausschnitts einer Faserverbundwerkstoff-Zugprobe;
- Fig. 2: eine schematische Darstellung eines Ausschnitts einer Faserverbundwerkstoff- Zugprobe mit Einleger;
- Fig. 3: eine schematische Darstellung eines Ausschnitts einer Faserverbundwerkstoff- Zugprobe mit Auflegern;
- Fig. 4: eine schematische Darstellung einer Anordnung zur Herstellung einer Faserverbundwerkstoff-Zugprobe mit Einleger;
- Fig. 5: eine schematische Darstellung einer Anordnung bei der Herstellung einer Faserverbundwerkstoff-Zugprobe mit Auflegern;
- Fig. 6: eine schematische Darstellung einer kompletten Faserverbundwerkstoff-Zugprobe;
- Fig. 7A: eine schematische Seitenansicht eines ruhenden Probeaufnahmekörpers;
- Fig. 7B: eine schematische Vorderansicht des ruhenden Probeaufnahmekörpers;
- Fig. 8: eine schematische Vorderansicht eines fahrbaren Probeaufnahmekörpers;
- Fig. 9A: eine schematische Seitenansicht einer Vorrichtung zur Durchführung eines Zugversuchs;
- Fig. 9B: eine schematische Vorderansicht der Vorrichtung zur Durchführung eines Zugversuchs;
- Fig.: 10A-10D Aufnahmen eines Zugversuchs in verschiedenen Stadien;
- Fig. 11: eine seitliche Detailaufnahme einer Faserverbundwerkstoff-Zugprobe nach dem Zugversuch;
- Fig. 12: eine Messkurve eines Hochgeschwindigkeitszugversuchs;
- Fig. 13: eine Spannung-Dehnungskurve des Hochgeschwindigkeitszugversuchs; und
- Fig. 14: eine schematische Darstellung eines Probenaufnahmekörpers mit einer aufgenommenen Faserverbundwerkstoff-Zugprobe gemäß einer weiteren Ausführungsform.

In den Figuren bezeichnen dieselben Bezugszeichen gleiche oder funktionsgleiche Komponenten, soweit nichts Gegenteiliges angegeben ist.

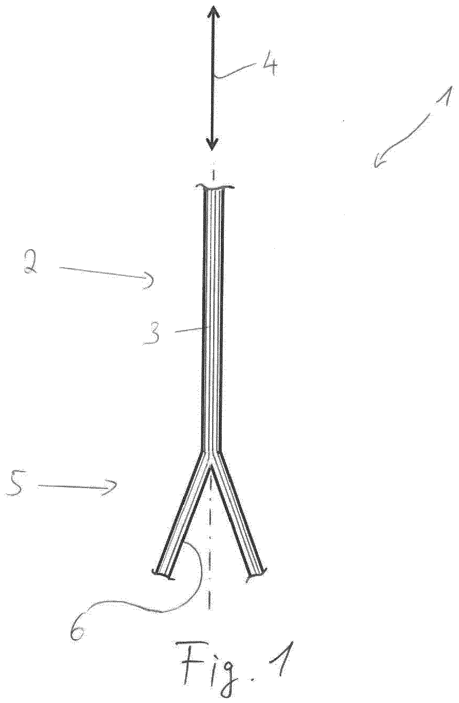

Fig. 1 zeigt eine schematische Darstellung eines Ausschnitts einer Faserverbundwerkstoff-Zugprobe 1. Es

ist ein Ausschnitt gezeigt, der ein Ende einer Faserverbundwerkstoff-Zugprobe 1 darstellt.

Die Faserverbundwerkstoff-Zugprobe 1 weist einen Prüfabschnitt 2 und einen Krafteinleitungsabschnitt 5 auf. Der Prüfabschnitt 2 ist gerade entlang und/oder parallel zu einer Zugbelastungsrichtung 4, für welche die Faserverbundwerkstoff-Zugprobe 1 ausgelegt ist, ausgebildet. Der Prüfabschnitt 2 enthält ein Fasermaterial 3, welches im Bereich des Prüfabschnitts 2 unidirektional in der Zugbelastungsrichtung 4 verlaufende Fasern aufweisen.

Das Fasermaterial 3 erstreckt sich weiter in den Krafteinleitungsabschnitt 5 und ist dort in zwei Stränge geteilt bzw. aufgespaltet, welche jeweils entlang einer schräg zu einer Zugbelastungsrichtung 4 ausgerichteten Fläche 6 verlaufen.

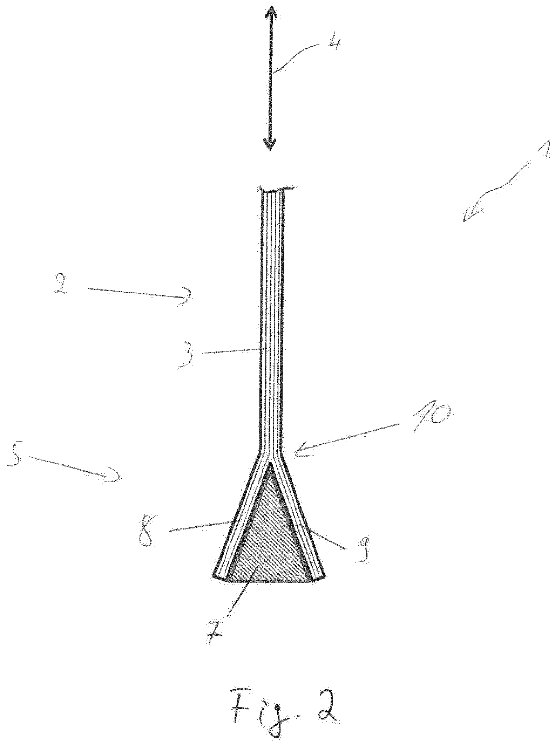

Fig. 2 zeigt eine schematische Darstellung eines Ausschnitts einer Faserverbundwerkstoff-Zugprobe 1 mit Einleger 7.

Der Einleger 7 ist symmetrisch keilförmig ausgebildet und teilt bzw. spaltet das Fasermaterial 3 im Bereich des Krafteinleitungsabschnitts 5 in zwei 2 Stränge 8, 9 auf, welche jeweils entlang einer schräg zu der Zugbelastungsrichtung 4 ausgerichteten Fläche verlaufen. Die beiden Stränge 8, 9 verlaufen demnach entlang zweier unterschiedlicher Seiten des Einlegers 7.

Zwischen dem Prüfabschnitt 2 und dem Krafteinleitungsabschnitt 5 befindet sich ein Übergang 10, an welchem der Einleger 7 mit einer Spitze endet und das Fasermaterial 3 sich in die Stränge 8 und 9 aufspaltet.

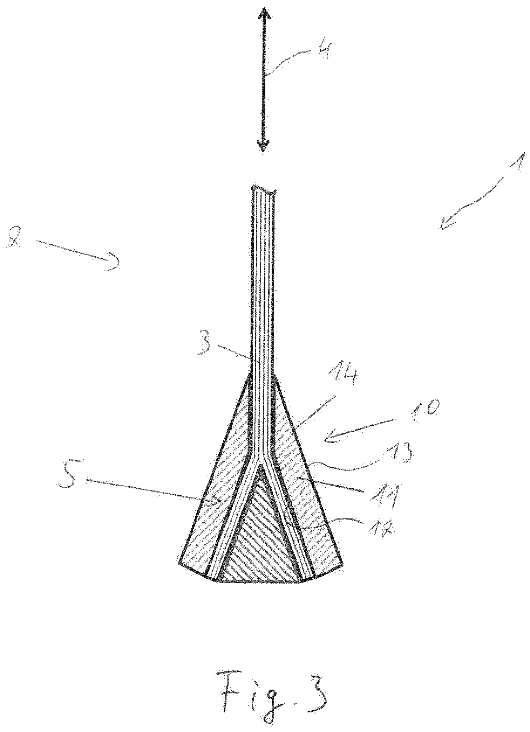

Fig. 3 zeigt eine schematische Darstellung eines Ausschnitts einer Faserverbundwerkstoff-Zugprobe 1 mit Auflegern 11.

Ein Aufleger 11 ist beidseitig jeweils außen an die in Fig. 2 gezeigte Zugprobe 1 angebracht oder angeformt. Er deckt den Bereich des Übergangs 10 ab und verläuft an seiner Innenseite 12 entlang dem Fasermaterial 3 bzw. in Faserrichtung.

Somit folgt er im Bereich des Prüfabschnitt 2 den entlang der Zugbelastungsrichtung 4 verlaufenden unidirektionalen Fasern und im Krafteinleitungsabschnitt entlang der schräg dazu verlaufenden Stränge 8, 9.

Gemeinsam bilden der Krafteinleitungsabschnitt 5 und die beiden Aufleger 11 eine symmetrische Keilform aus.

An der Außenseite 13 stellen die Aufleger 11 jeweils eine ebene Krafteinleitungsfläche 14 bereit, welche schräg zur Zugbelastungsrichtung 4 verläuft. Diese erstreckt sich über die gesamte Länge des Krafteinleitungsabschnitts 5 und über den Übergang 10 hinweg bis auf den Prüfabschnitt 2. Die Krafteinleitungsfläche 14 dient der Krafteinleitung einer Zugkraft in die Faserverbundwerkstoff-Zugprobe 1, insbesondere über eine an einem Probenaufnahmekörper vorgesehene und zu der Krafteinleitungsfläche 14 korrespondierende Kraftübertragungsfläche.

Die Aufleger 11 enthalten vorzugsweise einen dämpfenden Werkstoff. Insbesondere handelt es sich um ein dämpfendes Polymer, wie beispielsweise Polyvinylchlorid oder Polyamid. Auch zähe Harze kommen infrage.

Bei einer beispielhaften möglichen Ausführung kann eine Dämpfung mittels einer gewollten plastischen Verformung bei Krafteinwirkung, insbesondere ohne oder nur mit geringen elastischen Anteilen, erreicht werden. Es handelt sich beispielsweise um Polymere, deren typische Spannungs-Dehnungs-Kurven einen nennenswerten quasiplastischen Bereich aufweisen.

Der Aufleger 11 ist hier beispielhaft vollständig aus dem dämpfenden Werkstoff ausgebildet. Er kann bei einer weiteren Ausführungsform aber auch lediglich eine Schicht oder einen Abschnitt des dämpfenden Werkstoffs enthalten.

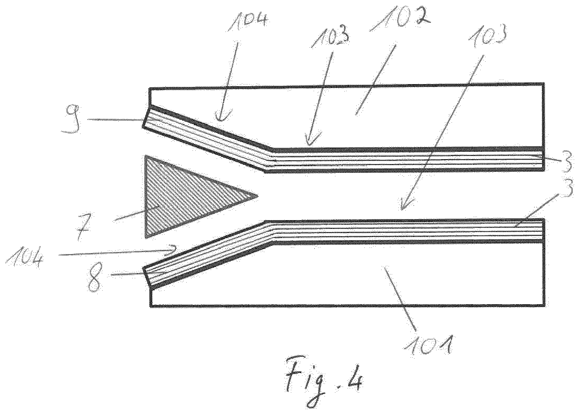

Fig. 4 zeigt eine schematische Darstellung einer Anordnung zur Herstellung einer Faserverbundwerkstoff-Zugprobe 1 mit Einleger 7. Gezeigt ist ein Ausschnitt der Anordnung im Bereich eines Endes einer Faserverbundwerkstoff-Zugprobe 1.

Dabei ist ein formgebendes Werkzeug mit einer ersten Werkzeughälfte 101 und einer zweiten Werkzeughälfte 102 vorgesehen. Zur Herstellung einer Zugprobe 1 wird auf die beiden Werkzeughälften 101, 102 jeweils ein Fasermaterial 3 aufgebracht. Das Fasermaterial 3 wird durch die Form der Werkzeughälften 101, 102 dabei jeweils mit einem geraden Faserabschnitt 103 und einem an den geraden Faserabschnitt 103 anschließenden, schräg dazu verlaufenden schrägen Faserabschnitt 104 geformt.

Zwischen die schrägen Faserabschnitte 104 wird der Einleger 7 eingelegt. Der Einleger 7 definiert dabei im eingelegten Zustand die schrägen Flächen 6 für die schrägen Faserabschnitte 104 an deren Innenseite.

Nach dem Einlegen des Einlegers 7 und einem Zusammenfügen der Werkzeughälften 101, 102 wird das Fasermaterial 3, sofern es sich um trockenes Fasermaterial handelt, mit einer Matrix infiltriert. Dabei wird der Einleger 7 mit in das Matrixmaterial eingebettet. Anschließend wird das Matrixmaterial unter Druck und Wärme ausgehärtet, sodass ein Faserverbundbauteil 105 hergestellt wird.

Dieses Faserverbundbauteil 105 ist als Faserverbundwerkstoff-Zugprobe gemäß Fig. 2 ausgebildet.

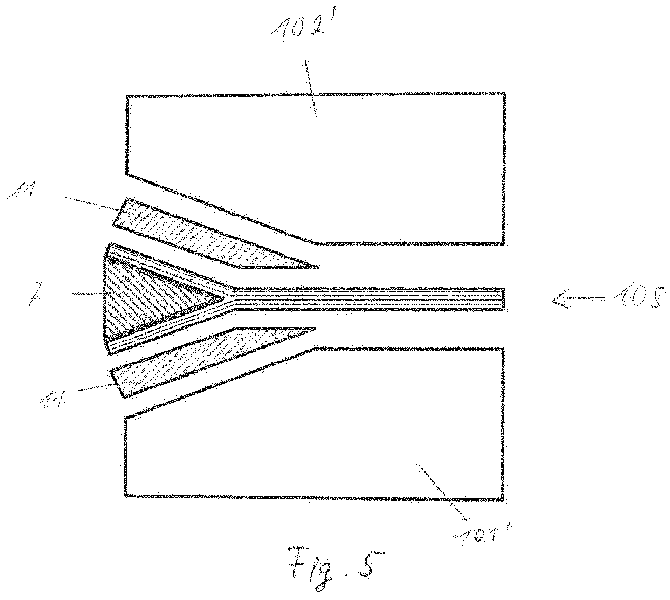

Fig. 5 zeigt eine schematische Darstellung einer Anordnung bei der Herstellung einer Faserverbundwerkstoff-Zugprobe mit Aufleger 11.

In der gezeigten beispielhaften Ausführungsform wird ein wie in Bezug auf Fig. 4 beschrieben hergestelltes Faserverbundbauteil 105 gemeinsam mit den beiden außenseitig daran angeordneten, getrennt hergestellten Auflegern 11 in ein weiteres, an die Form der Aufleger 11 angepasstes formgebendes Werkzeug mit einer ersten Werkzeughälfte 101' und einer zweiten Werkzeughälfte 102' eingelegt. Es ist ein Harz oder einen Klebstoff zwischen den Auflegern 11 und dem Faserverbundbauteil 105 vorgesehen, wobei die Aufleger 11, insbesondere unter Druck und/oder Wärme, im Bereich der schrägen Faserabschnitte 104 und eines Übergangs von den schrägen auf die geraden Faserabschnitt 103 an das Faserverbundbauteil 105 angeklebt werden.

Alternativ wäre es auch denkbar, das Faserverbundbauteil 104 ohne die Aufleger 11 in das Werkzeug mit den Werkzeughälfte 101', 102' einzulegen und die Aufleger 11 durch Ausgießen des Werkzeuges bzw. im Bereich der in Fig. 5 eingezeichneten Aufleger 11 vorgesehene Hohlräume herzustellen. In diesem Fall handelt es sich um an das Faserverbundbauteil 105 angegossene Aufleger 11.

Bei einer noch weiteren Ausführungsform können die Aufleger 11, das Fasermaterial 3 und der Einleger 7 gemeinsam, insbesondere in einem trockenen Zustand, in die Werkzeughälften 101', 102' eingelegt und in einem gemeinsamen Arbeitsschritt infiltriert und anschließend unter Druck und Temperatur ausgehärtet werden. Die in Fig. 4 gezeigte Herstellung eines Faserverbundbauteils 105 als Zwischenschritt würde dabei entfallen.

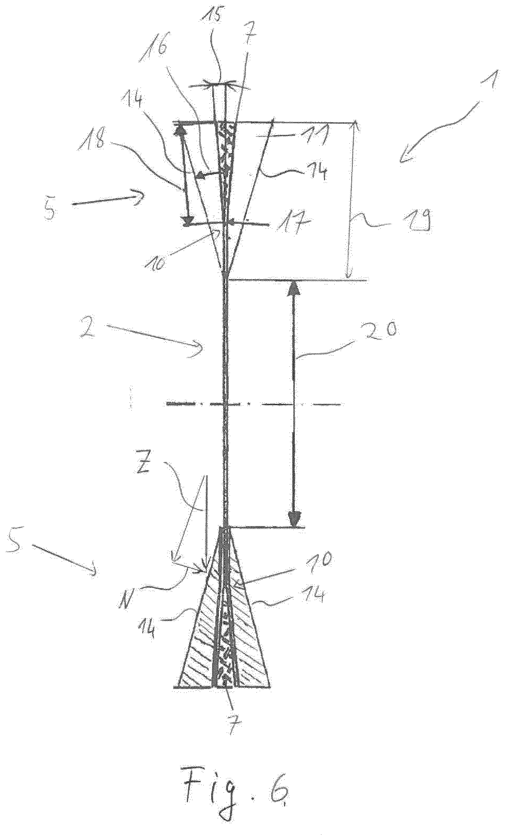

Fig. 6 zeigt eine schematische Darstellung einer kompletten Zugprobe 1. Dementsprechend sind beide Enden einer Faserverbundwerkstoff-Zugprobe 1 schematisch dargestellt. Die Enden sind jeweils wie in Bezug auf Fig. 3 im Detail gezeigt, ausgebildet.

Die Einleger 7 weisen jeweils einen Öffnungswinkel 15 auf, welcher kleiner als ein Öffnungswinkel 16 der Aufleger 11 ausgebildet ist. Ferner weisen die Einleger 7 eine Länge 18 auf, welche kleiner als eine Länge 19 der Aufleger 11 ausgebildet ist. Die Aufleger 11 können im Bereich des Übergangs mit einem kleinen Radius 17, der vorzugsweise dem Radius der Fasern des Fasermaterials 3 in diesem Bereich entspricht, ausgebildet sein. Beispielsweise liegt ein solcher Radius im Bereich von 1 bis 2 cm.

Der Prüfabschnitt 2 der Zugprobe 1 verbindet die beiden Krafteinleitungsabschnitte 5. Der Prüfabschnitt 2 beginnt jeweils am Übergang 10 zu dem Krafteinleitungsabschnitt 5 und ist somit an seinen Enden jeweils durch die Aufleger 11 abgedeckt. Somit ist eine tatsächliche Prüflänge 20 der Faserverbundwerkstoff-Zugprobe 1 kürzer als der Prüfabschnitt 2, Jedoch ist mittels der Aufleger 11 sichergestellt, dass die Faserverbundwerkstoff-Zugprobe 1, wie bei einem Zugversuch erwünscht, im Bereich der Prüflänge 20 versagt und nicht an den Übergängen 10.

Zur Durchführung eines Zugversuchs wird eine Zugkraft Z parallel zur Zugbelastungsrichtung 4 des Prüfabschnitt 2 an den Krafteinleitungsflächen 14 der Aufleger in die Zugprobe 1 eingeleitet, wie exemplarisch an einem der Aufleger 11 eingezeichnet. Dadurch, dass die Krafteinleitungsflächen 14 schräg zur Zugkraft Z ausgerichtet sind, entsteht eine durch die Zugkraft Z hervorgerufene ebenfalls eingezeichnete Normalkraftkomponente N, welche auf die Faserverbundwerkstoff-Zugprobe 1 im Bereich des Krafteinleitungsabschnitts 5 und des Übergangs 10 wirkt und z die Faserverbundwerkstoff-Zugprobe 1 lokal zusammenpresst. Diese Normalkraft bzw. diese Pressung ist erwünscht, um, insbesondere im Bereich des Übergangs 10, eine Delamination bzw. ein Ablösen des Fasermaterials vom Einleger 7 zu verhindern. Die Höhe der Normalkraft N ist dabei näherungsweise proportional zur Höhe der Zugkraft Z. Eine Abweichung von einer idealen Proportionalität kann durch an den Krafteinleitungsflächen vorhandene Reibung entstehen.

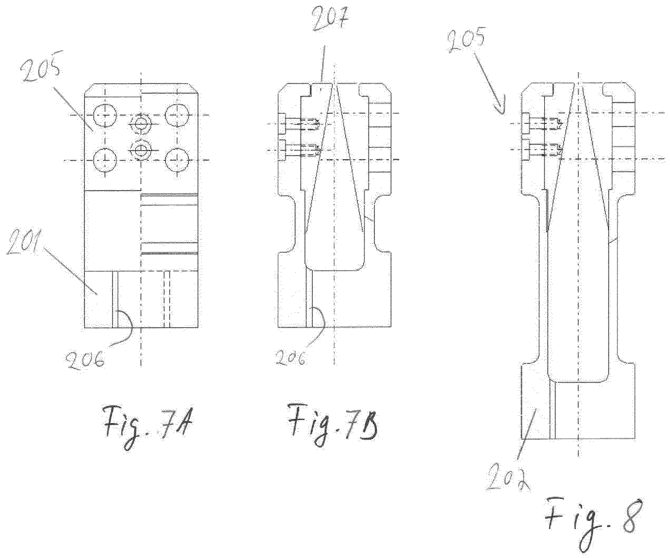

Fig. 7A zeigt eine schematische Seitenansicht eines ruhenden Probeaufnahmekörpers 201. Fig. 7B zeigt eine schematische Vorderansicht des ruhenden Probeaufnahmekörpers 201.

Der Probenaufnahmekörper 201 ist Teil einer Vorrichtung 200 zum Durchführen eines Zugversuchs.

Der Probenaufnahmekörper 201 weist einen Aufnahmeabschnitt 205 und einen Anbindungsabschnitt 206 auf. Der Aufnahmeabschnitt 205 ist zur Aufnahme von Spannbacken, welche als Spannkeile 207 ausgeführt sind, ausgebildet. Die Spannkeile 207 werden mittels Schrauben an den Aufnahmeabschnitten 205 befestigt.

Der Anbindungsabschnitt 206 ist als ein Gewinde zur Anbindung an eine Kraftmessdose und/oder an eine Beschleunigungsvorrichtung ausgebildet.

Fig. 8 zeigt eine schematische Vorderansicht eines fahrbaren Probeaufnahmekörpers.

Der prinzipielle Aufbau des fahrbaren Probenaufnahmekörpers 202 gleicht dem Aufbau des ruhenden Probenaufnahmekörpers 201. Im Unterschied zum ruhenden Probeaufnahmekörper 201 weist der fahrbare Probenaufnahmekörper 202 jedoch einen verlängerten Aufnahmeabschnitt 205 auf. Dieser verlängerte Aufnahmeabschnitt 205 dient als Beschleunigungsstrecke zur Beschleunigung einer darin aufgenommenen Faserverbundwerkstoff-Zugprobe 1 bevor dem Eingreifen der Spannkeile 207 an der Zugprobe 1.

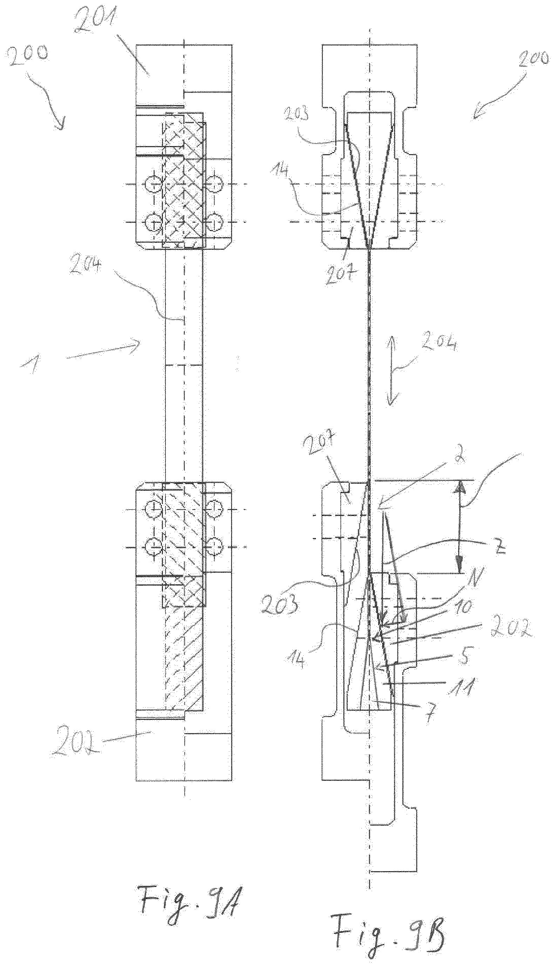

Fig. 9A zeigt eine schematische Seitenansicht einer Vorrichtung 200 zur Durchführung eines Zugversuchs. Fig. 9B zeigt eine schematische Vorderansicht der Vorrichtung 200.

In die Vorrichtung 200 ist eine Faserverbundwerkstoff-Zugprobe 1 aufgenommen bzw. eingelegt. Somit ist hier eine Versuchsanordnung eines Zugversuchs gezeigt.

Oben dargestellt ist der ruhende Probenaufnahmekörper 201 angeordnet. Der fahrbare Probenaufnahmekörper 202 am unteren Ende dargestellt. Ebenso ist eine umgekehrte Anordnung der Probenaufnahmekörper 201, 202 oder eine waagrechte Anordnung der Probenaufnahmekörper 201, 202 möglich.

In die Probenaufnahmekörper 201, 202 ist die Faserverbundwerkstoff-Zugprobe 1 aufgenommen. Insbesondere handelt es sich dabei um eine Faserverbundwerkstoff-Zugprobe 1 gemäß Fig. 6.

Die Faserverbundwerkstoff-Zugprobe 1 ist als Flachzugprobe ausgebildet, sodass sie in der Seitenansicht der Fig. 9 A eine größere Breite als in der Vorderansicht gemäß Fig. 9 B aufweist.

Fig. 9 A zeigt ausschließlich einen Ruhezustand bevor einem Beschleunigen des fahrbaren Probenaufnahmekörpers 202.

Im Ruhezustand ist der Krafteinleitungsabschnitt 5 der Faserverbundwerkstoff-Zugprobe 1 in dem verlängerten Aufnahmeabschnitte 205 des fahrbaren Probenaufnahmekörpers 202 angeordnet. Der Krafteinleitungsabschnitt 5 wirkt dabei noch nicht mit den Spannkeilen 207 zusammen, sondern ist davon mit einem der Länge der Beschleunigungsstrecke 208 entsprechenden Abstand beabstandet.

Fig. 9 B zeigt auf der linken Seite den ruhenden Zustand und auf der rechten Seite einen verfahrenen Zustand, in welchem der Probenaufnahmekörper 202 über die Beschleunigungsstrecke 208 beschleunigt wurde und eine in Zugprüfrichtung 204 wirkende Zugkraft Z auf die Faserverbundwerkstoff-Zugprobe 1 aufbringt.

Zum Erzeugen der Zugkraft weist die Vorrichtung 200 für Hochgeschwindigkeits-Zugversuche beispielsweise einen servohydraulischen Antrieb mit einer Beschleunigungsstrecke auf. Alternativ kann ein Fallgewicht oder ein auf andere Weise, insbesondere mittels eines Druckluftzylinders, beschleunigtes Gewicht vorgesehen sein.

Die Zugkraft Z wird über eine schräg zur Zugprüfrichtung 204 verlaufende Kraftübertragungsfläche 203 der Spannkeile 207 auf die Krafteinleitungsfläche 14 der Faserverbundwerkstoff-Zugprobe bzw. deren Aufleger 11 aufgebracht. Auch hier wird, wie in Bezug auf Fig. 6 erläutert, aufgrund der schrägen Kraftübertragungsfläche 203 aus der Zugkraft Z resultierende eine Normalkraft N auf die Zugprobe, insbesondere im Bereich des Übergangs 10 zwischen dem Krafteinleitungsabschnitt 5 und dem Prüfabschnitt 2, aufgebracht. Die Normalkraft wird mittels des Einlegers 7 abgestützt.

An den schrägen Kraftübertragungsflächen 203 und Krafteinleitungsflächen 14 entsteht im gespannten Zustand ein Kraft- und Formschluss zwischen dem Probenaufnahmekörper 202 und der Zugprobe 1.

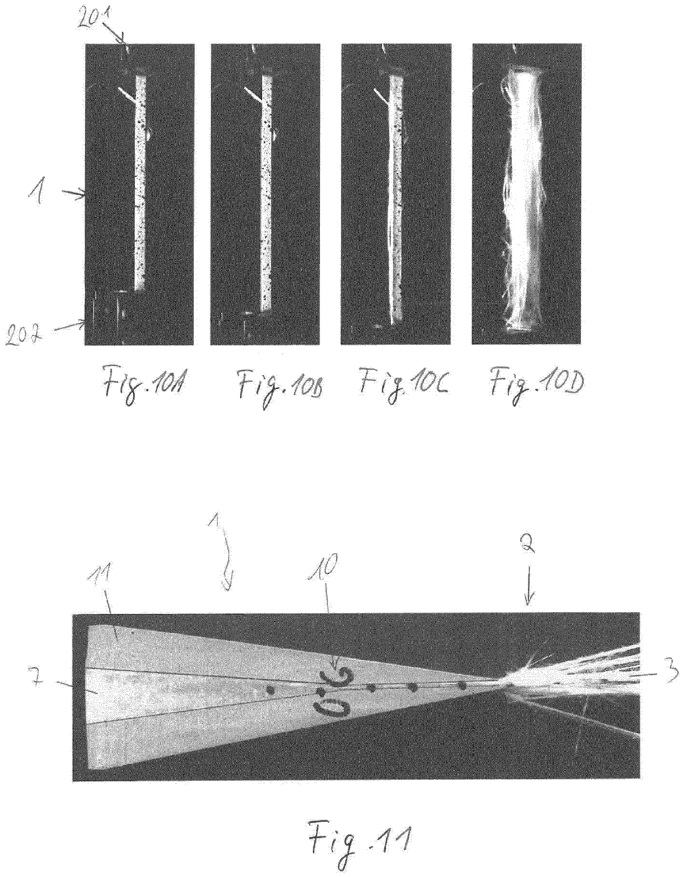

Die Fig. 10A-10D zeigen Aufnahmen eines Zugversuchs in verschiedenen Stadien.

Bei Fig. 10 A handelt es sich um den Ruhezustand eine Versuchsanordnung, wie in Bezug auf Fig. 9 A beschrieben.

In Fig. 10 B ist ein verfahrener Zustand gezeigt, bei dem bereits eine Zugkraft auf die Zugprobe 1 wirkt, wie in Bezug auf Fig. 9 B beschrieben.

Fig. 10 C zeigt einen bereits deutlich gelängten Zustand der Zugprobe 1, wobei am seitlichen Rand der Faserverbundwerkstoff-Zugprobe 1 bereits erste Versagenserscheinungen im Prüfabschnitt 2 beginnen.

Fig. 10 D zeigt die Faserverbundwerkstoff-Zugprobe 1 nach Beendigung des Zugversuchs nach einem vollständigen Versagen bzw. Bruch im Bereich des Prüfabschnitts 2.

Fig. 11 zeigt eine seitliche Detailaufnahme einer Faserverbundwerkstoff-Zugprobe nach dem Zugversuch. Gezeigt ist ein Ausschnitt im Bereich des Übergangs 10.

Zu erkennen ist hier anhand des aufgerissenen Fasermaterials 3, dass die Zugprobe 1 im Bereich des Prüfabschnitts 2 nach dem Auslauf des Auflegers 11 versagt, jedoch im Bereich des Übergangs 10 zwischen Krafteinleitungsabschnitt 5 und Prüfabschnitt 2, welcher durch den Aufleger 11 abgedeckt ist, unversehrt ist.

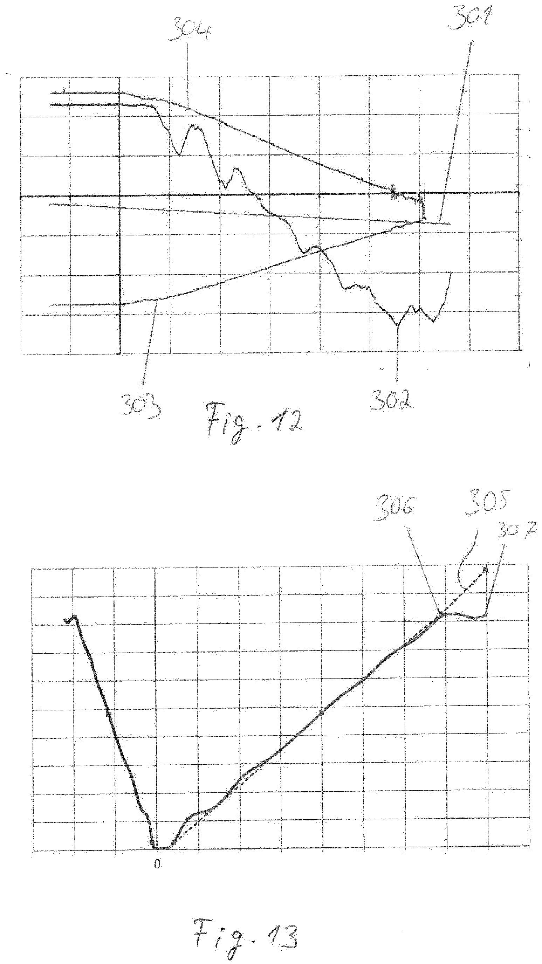

Fig. 12 zeigt eine Messkurve eines Hochgeschwindigkeitszugversuchs.

Gezeigt sind dabei die Verläufe einer Verschiebung 301 der Faserverbundwerkstoff-Zugprobe über die Zeit, wobei die Messwerte über der auf der Abszisse aufgetragenen Zeit dargestellt sind.

Dargestellt sind eine Verschiebung 301 der Zugprobe während des Zugversuchs sowie ein mittels eines Piezo-Sensors gemessenes Kraft-Signal 302. Das Kraftsignal weist zwar geringfügige Schwingungen auf, jedoch liegen diese in einem zu Versuchsauswertung geeigneten Umfang.

Des Weiteren sind eine im Verlauf des Zugversuchs an der Zugprobe über Dehnmessstreifen gemessene Längsdehnung 303 und eine Querdehnung 304 aufgetragen.

Fig. 13 zeigt eine Spannung-Dehnungskurve des Hochgeschwindigkeitszugversuchs. Es handelt sich hierbei um eine Messkurve nach einem geeigneten Glätten bzw. Filtern der Messdaten.

Aufgetragen ist die Spannung über der Dehnung. Von einer 0-Dehnung ausgehend ist nach links eine negative Dehnung in Querrichtung der Zugprobe und nach rechts eine positive Dehnung in Längsrichtung der Zugprobe aufgetragen.

Mit einer gestrichelten Linie ist eine aus der Messkurve resultierende Hook'sche Gerade 305 eingezeichnet, deren Steigung den E-Modul des Materials bildet.

Des Weiteren ist eine Streckgrenze 306 erkennbar, an welcher eine plastische Deformation des Materials der Faserverbundwerkstoff-Zugprobe einsetzt. Ein Bruch der Faserverbundwerkstoff-Zugprobe setzt hier bereits nach einem kurzen Bereich plastischer Dehnung des Materials an einem Ende 307 der Kurve ein.

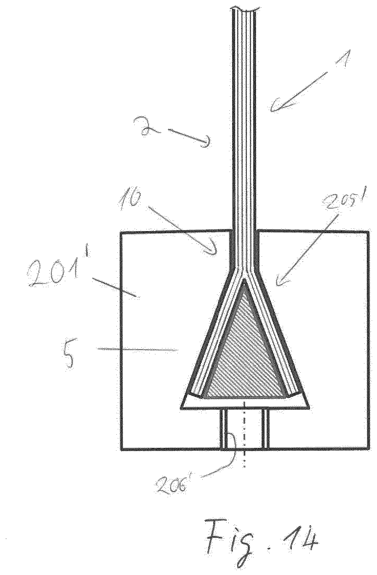

Fig. 14 zeigt eine schematische Darstellung eines Probenaufnahmekörpers 201' mit einer aufgenommenen Zugprobe 1 gemäß einer weiteren Ausführungsform.

Bei dieser Ausführungsform ist eine Einspannung der Zugprobe 1 in einen Probenaufnahmekörper 201' ohne einen Aufleger bzw. auflegerfrei vorgesehen. Stattdessen schmiegt sich der Aufnahmebereich 205' des Probenaufnahmekörpers 201' hier durchgehend von dem Krafteinleitungsabschnitt 5 über den Übergang 10 bis an den Prüfabschnitt 2 an die Faserverbundwerkstoff-Zugprobe 1 an. Über den hinter dem Ende der Zugprobe 1 vorgesehenen Anbindungsabschnitt 206' kann eine Zugkraft aufgebracht werden.

Derartige Ausführungen sind beispielsweise für Zugversuche mit sehr hoher Prüfgeschwindigkeit, bei welchen für konventionelle Zugprobengeometrien mit Faserverbundwerkstoffen eine Gefahr des Durchrutschens oder Versagens im Bereich der Einspannung besteht, geeignet. Insbesondere ist ein Einsatz einer derartigen Anordnung in einer üblicherweise als "Hopkinson-Bar" bezeichneten Versuchsanordnung, bei der eine Masse mittels eines Druckluftzylinders auf eine hohe Geschwindigkeit beschleunigt wird, möglich. Der Anbindungsabschnitt 206' stellt dabei eine Kompatibilität zu einer derartigen Versuchsanordnung bereit.

Bei einer weiteren Ausführung wäre es denkbar, einen Aufleger 11 bereits als Probenaufnahmekörper 201 zur direkten Anbindung an eine Vorrichtung zur Durchführung eines Zugversuchs auszubilden. In diesem Fall könnten beispielsweise die beiden Aufleger 11 metallisch ausgebildet sein und hinter dem Ende der Zugprobe 1 miteinander verbunden oder verbindbar sein. Dabei ist im Bereich der Verbindung der beiden Aufleger 11 ebenfalls ein Anbindungsabschnitt, beispielsweise in Form eines Innengewindes, zur Befestigung an einer Vorrichtung zur Durchführung eines Zugversuchs vorgesehen.

Beispielsweise ist die Ausbildung des Einlegers 7 als Keil und die Aufteilung des Fasermaterials 3 in zwei Stränge ist rein beispielhaft zu verstehen. Ebenso wäre es denkbar, in Einleger mit einer anderen symmetrischen Form, beispielsweise als Pyramide, auszubilden und das Fasermaterial in eine andere Mehrzahl von Strängen, beispielsweise bei einer vierseitigen Pyramide in vier Stränge, aufzuteilen. Ferner wäre, insbesondere bei einer Rundzugprobe, denkbar, eine Ausbildung des Einlegers 7 als Kegel und eine umlaufende Aufspaltung des Fasermaterials 3 entlang der Kegelmantelfläche vorzusehen.

Alternativ zu einem polymeren Aufleger wäre es denkbar, den Aufleger mit einem duktilen Metall ausgebildet vorzusehen, um einen verbesserten Reibschluss mit einem Probenaufnahmekörper bereitzustellen. Eine Dämpfung könnte dabei durch plastische Verformung des duktilen Materials erfolgen. In diesem Fall wäre es auch denkbar, für quasi statische Zugversuche die Krafteinleitungsfläche parallel zur Zugbelastungsrichtung, beispielsweise zum Zusammenwirken mit konventionellen Parallel-Spannbacken, auszubilden.

### Bezugszeichenliste

- 1: Faserverbundwerkstoff-Zugprobe
- 2: Prüfabschnitt
- 3: Fasermaterial
- 4: Zugbelastungsrichtung
- 5: Krafteinleitung Abschnitt
- 6: Fläche
- 7: Einleger
- 8: Strang
- 9: Strang
- 10: Übergang
- 11: Aufleger
- 12: Innenseite
- 13: Außenseite
- 14: Krafteinleitungsfläche
- 15: Öffnungswinkel
- 16: Öffnungswinkel
- 17: Radius
- 18: Länge
- 19: Länge
- 20: Prüflänge
- 101, 101': erste Werkzeughälfte
- 102, 102': zweite Werkzeughälfte
- 103: gerader Faserabschnitt
- 104: schräger Faserabschnitt
- 105: Faserverbundbauteil
- 200: Vorrichtung
- 201, 201': Probenaufnahmekörper
- 202: Probenaufnahmekörper
- 203: Kraftübertragungsfläche
- 204: Zugprüfrichtung
- 205, 205': Aufnahmeabschnitt
- 206, 206': Anbindungsabschnitt
- 207: Spannkeil
- 208: Beschleunigungsstrecke
- Z: Zugkraft
- N: Normalkraft

## Patentansprüche

1. Faserverbundwerkstoff-Zugprobe, mit:
einem Prüfabschnitt (2), welcher ein gerade angeordnetes Fasermaterial (3) und eine für eine Materialprüfung vorbestimmte Zugbelastungsrichtung (4) aufweist, wobei der Prüfabschnitt (2) parallel ist zu der Zugbelastungsrichtung (4) und das Fasermaterial (3) im Prüfabschnitt (2) unidirektional in der Zugbelastungsrichtung (4) verlaufende Fasern aufweist; und
einem Krafteinleitungsabschnitt (5), wobei das Fasermaterial (3) in dem Krafteinleitungsabschnitt (5) zumindest teilweise entlang einer schräg zu der Zugbelastungsrichtung (4) ausgerichteten Fläche (6) verläuft.

2. Faserverbundwerkstoff-Zugprobe nach Anspruch 1,
**dadurch gekennzeichnet,**
**dass** der Krafteinleitungsabschnitt (5) einen in das Fasermaterial (3) eingebetteten Einleger (7) aufweist.

3. Faserverbundwerkstoff-Zugprobe nach Anspruch 2,
**dadurch gekennzeichnet,**
**dass** der Einleger (7) keilförmig, insbesondere symmetrisch keilförmig, ausgebildet ist.

4. Faserverbundwerkstoff-Zugprobe nach Anspruch 2 oder 3,
**dadurch gekennzeichnet,**
**dass** der Einleger (7) das Fasermaterial im Bereich des Krafteinleitungsabschnitts (5) in zumindest zwei Stränge (8, 9) aufspaltet, welche entlang unterschiedlicher Seiten des Einlegers (7) verlaufen.

5. Faserverbundwerkstoff-Zugprobe nach einem der Ansprüche 2 bis 4,
**dadurch gekennzeichnet,**
**dass** im Bereich eines Übergangs (10) von dem Prüfabschnitt (2) zu dem Krafteinleitungsabschnitt (5) ein außenliegender Aufleger (11) vorgesehen ist, welcher an seiner Innenseite (12) entlang des Fasermaterials (3) verläuft und an seiner Außenseite (13) eine Krafteinleitungsfläche (14) für eine Krafteinleitung einer Probenaufnahme ausbildet.

6. Faserverbundwerkstoff-Zugprobe nach Anspruch 5,
**dadurch gekennzeichnet,**
**dass** die Krafteinleitungsfläche (14) des Auflegers (11) sich von dem Krafteinleitungsabschnitt (5) über den Übergang (10) hinweg bis teilweise in den Prüfabschnitt (2) erstreckt und/oder schräg zur Zugbelastungsrichtung (4) verläuft.

7. Faserverbundwerkstoff-Zugprobe nach Anspruch 5 oder 6,
**dadurch gekennzeichnet,**
**dass** beidseitig an der Zugprobe (1) je ein Aufleger (11) angeordnet ist und/oder der Krafteinleitungsabschnitt (5) gemeinsam mit dem/den Aufleger(n) (11) eine Keilform, insbesondere eine symmetrische Keilform, ausbildet.

8. Faserverbundwerkstoff-Zugprobe nach einem der vorangehenden Ansprüche 5 bis 7,
**dadurch gekennzeichnet,**
**dass** der Aufleger (11) einen dämpfenden Werkstoff, insbesondere ein dämpfendes Polymer, vorzugsweise Polyvinylchlorid oder Polyamid, enthält.

9. Verfahren zum Herstellen einer Faserverbundwerkstoff-Zugprobe, nach wenigstens einem der vorhergehenden Ansprüche mit den folgenden Verfahrensschritten:
Einlegen eines Strangs (8;9) mit Fasermaterial (3) in ein formgebendes Werkzeug (101, 102; 101', 102') wobei das Fasermaterial (3) mit einem geraden Faserabschnitt (103) mit gerade angeordnetem Fasermaterial und einem an den geraden Faserabschnitt (103) anschließenden, schräg dazu verlaufenden schrägen Faserabschnitt (104) geformt wird;
Einlegen eines eine schräge Fläche (6) für den schrägen Faserabschnitt (104) definierenden Einlegers (7) im Bereich des schrägen Faserabschnitts (104); und
Aushärten eines Matrixmaterials zur Ausbildung eines Faserverbundbauteils (105).

10. Verfahren nach Anspruch 9,
**dadurch gekennzeichnet,**
**dass** an einer ersten Werkzeughälfte (101; 101') des formgebenden Werkzeugs ein erster Strang (8) mit Fasermaterial (3) und an einer zweiten Werkzeughälfte (102; 102') des formgebenden Werkzeugs ein zweiter Strang (9) mit Fasermaterial (3) eingelegt wird, wobei der Einleger (7) zwischen den ersten Strang (9) und den zweiten Strang (9) eingelegt wird.

11. Verfahren nach Anspruch 9 oder 10,
**dadurch gekennzeichnet,**
**dass** ein Schritt des Ausbildens oder Anfügens eines äußeren Auflegers (11) vorgesehen ist, wobei der Aufleger an einer Außenseite des Faserverbundbauteils (105) im Bereich des Übergangs zwischen dem geraden Faserabschnitt (103) und dem schrägen Faserabschnitt (104) angeordnet wird.

12. Vorrichtung (200) zur Durchführung eines Zugversuchs in Kombination mit:
einer Faserverbundwerkstoff-Zugprobe (1) gemäß einem der Ansprüche 5 bis 8, mit:
einem Probeaufnahmekörper (201;202), welcher eine Kraftübertragungsfläche (203) zum Einleiten einer Zugkraft in die Krafteinleitungsfläche (14) der Faserverbundwerkstoff-Zugprobe (1) aufweist;
wobei die Vorrichtung (200) eine vorbestimmte Zugprüfrichtung (204) aufweist, zu der die Kraftübertragungsfläche (203) schräg verläuft; und
wobei der Probenaufnahmekörper (201; 202) länger als ein Krafteinleitungsabschnitt (5) der Faserverbundwerkstoff-Zugprobe (1) ausgebildet ist, um die Faserverbundwerkstoff-Zugprobe (1) im Bereich eines Übergangs (10) zwischen dem Krafteinleitungsabschnitt (5) und einem Prüfabschnitt (2) mit einer aus der Zugkraft (Z) resultierenden Normalkraft (N) zu beaufschlagen.

13. Vorrichtung nach Anspruch 12,
**dadurch gekennzeichnet,**
**dass** der Probenaufnahmekörper (201; 202) zur Kraftübertragung auf einen Aufleger (11) ausgebildet ist, welcher außen an der Faserverbundwerkstoff-Zugprobe (1) angebracht oder angeformt ist und über den Übergang (10) hinweg verläuft.

14. Verfahren zur Durchführung eines Zugversuchs, mit den folgenden Verfahrensschritten:
Einlegen einer Faserverbundwerkstoff-Zugprobe (1) gemäß einem der Ansprüche 5 bis 8, in eine Vorrichtung (200) zur Durchführung eines Zugversuchs gemäß Anspruch 12 oder 13;
Aufbringen einer Zugkraft (Z) auf die Faserverbundwerkstoff-Zugprobe (1) über zur Zugprüfrichtung (204) schräg verlaufende Kraftübertragungsflächen (203) der Vorrichtung (200) und korrespondierende Krafteinleitungsflächen (14) der Faserverbundwerkstoff-Zugprobe (1); und
Abstützen einer aus der Zugkraft (Z) resultierenden, auf die Faserverbundwerkstoff-Zugprobe (1) wirkenden Normalkraft (N) mittels eines in die Faserverbundwerkstoff-Zugprobe (1) im Bereich eines Krafteinleitungsabschnitts (5) eingebetteten Einlegers (7).

15. Verfahren nach Anspruch 14,
**dadurch gekennzeichnet,**
**dass** im Bereich eines zulaufenden Endes des Einlegers (7), insbesondere an einem Übergang (10) von dem Krafteinleitungsabschnitt (5) zu einem Prüfabschnitt (2) der Faserverbundwerkstoff-Zugprobe (1), eine auf die Faserverbundwerkstoff-Zugprobe (1) wirkende Normalkraft (N) aufgebracht wird, insbesondere über einen im Bereich des Übergangs (10) außen an der Faserverbundwerkstoff-Zugprobe (1) vorgesehenen Aufleger (11), der die Krafteinleitungsfläche (14) bildet.

## Claims

1. Fibre composite material tensile sample, comprising:
a test portion (2), which comprises a fibre material (3) arranged in a straight line and has a tensile loading direction (4) that is predetermined for a material test,
wherein the test portion (2) is parallel to the tensile loading direction (4) and the fibre material (3) in the test portion (2) has fibres running unidirectionally in the tensile loading direction (4); and
a force introduction portion (5), wherein the fibre material (3) in the force introduction portion (5) runs at least partially along a surface (6) aligned obliquely in relation to the tensile loading direction (4).

2. Fibre composite material tensile sample according to Claim 1,
**characterized in that**
the force introduction portion (5) has an insert (7) embedded in the fibre material (3).

3. Fibre composite material tensile sample according to Claim 2,
**characterized in that**
the insert (7) is wedge-shaped, in particular symmetrically wedge-shaped.

4. Fibre composite material tensile sample according to Claim 2 or 3,
**characterized in that**
the insert (7) splits up the fibre material into at least two strands (8, 9), which run along different sides of the insert (7), in the region of the force introduction portion (5).

5. Fibre composite material tensile sample according to one of Claims 2 to 4,
**characterized in that**
an external bearing means (11), the inner side (12) of which runs along the fibre material (3) and the outer side (13) of which forms a force introduction surface (14) for the introduction of force into a test sample, is provided in the region of a transition (10) from the test portion (2) to the force introduction portion (5).

6. Fibre composite material tensile sample according to Claim 5,
**characterized in that**
the force introduction surface (14) of the bearing means (11) extends from the force introduction portion (5), beyond the transition (10) and partially into the test portion (2), and/or runs obliquely in relation to the tensile loading direction (4).

7. Fibre composite material tensile sample according to Claim 5 or 6,
**characterized in that**,
on either side of the tensile sample (1), a respective bearing means (11) is arranged, and/or the force introduction portion (5) together with the one or more bearing means (11) forms a wedge shape, in particular a symmetrical wedge shape.

8. Fibre composite material tensile sample according to one of the preceding Claims 5 to 7,
**characterized in that**
the bearing means (11) contains a damping material, in particular a damping polymer, preferably polyvinyl chloride or polyamide.

9. Method for producing a fibre composite material tensile sample according to at least one of the preceding claims, having the following method steps:
inserting a strand (8; 9) comprising fibre material (3) into a shaping tool (101, 102; 101', 102'), wherein the fibre material (3) is shaped with a straight fibre portion (103) comprising fibre material arranged in a straight line and an oblique fibre portion (104) that adjoins the straight fibre portion (103) and runs obliquely in relation thereto;
inserting an insert (7), which defines an oblique surface (6) for the oblique fibre portion (104), in the region of the oblique fibre portion (104); and
curing a matrix material to form a fibre composite component (105).

10. Method according to Claim 9,
**characterized in that**
a first strand (8) comprising fibre material (3) is inserted in a first mould half (101; 101') of the shaping tool, and a second strand (9) comprising fibre material (3) is inserted in a second mould half (102; 102') of the shaping tool, wherein the insert (7) is inserted between the first strand (8) and the second strand (9).

11. Method according to Claim 9 or 10,
**characterized in that**
a step of forming or joining an external bearing means (11) is provided, wherein the bearing means is arranged on an outer side of the fibre composite component (105) in the region of the transition between the straight fibre portion (103) and the oblique fibre portion (104).

12. Device (200) for carrying out a tensile test in combination with:
a fibre composite material tensile sample (1) according to one of Claims 5 to 8, having:
a sample receiving body (201; 202), which has a force transfer surface (203) for introducing a tensile force into the force introduction surface (14) of the fibre composite material tensile sample (1);
wherein the device (200) has a predetermined tensile test direction (204), in relation to which the force transfer surface (203) runs obliquely; and
wherein the sample receiving body (201; 202) is longer than a force introduction portion (5) of the fibre composite material tensile sample (1), in order to apply a normal force (N) resulting from the tensile force (Z) to the fibre composite material tensile sample (1) in the region of a transition (10) between the force introduction portion (5) and a test portion (2).

13. Device according to Claim 12,
**characterized in that**
the sample receiving body (201; 202) is designed to transfer force to a bearing means (11), which is attached to or integrally moulded on the outside of the fibre composite material tensile sample (1) and runs beyond the transition (10).

14. Method for carrying out a tensile test, having the following method steps:
inserting a fibre composite material tensile sample (1) according to one of Claims 5 to 8 into a device (200) for carrying out a tensile test according to Claim 12 or 13;
applying a tensile force (Z) to the fibre composite material tensile sample (1) via force transfer surfaces (203), running obliquely in relation to the tensile testing direction (204), of the device (200) and via corresponding force introduction surfaces (14) of the fibre composite material tensile sample (1); and
supporting a normal force (N), which results from the tensile force (Z) and acts on the fibre composite material tensile sample (1), by means of an insert (7) embedded in the fibre composite material tensile sample (1) in the region of a force introduction portion (5).

15. Method according to Claim 14,
**characterized in that**
a normal force (N) acting on the fibre composite material tensile sample (1) is applied in the region of a tapering end of the insert (7), in particular at a transition (10) from the force introduction portion (5) to a test portion (2) of the fibre composite material tensile sample (1), in particular via a bearing means (11) that is provided on the outside of the fibre composite material tensile sample (1) in the region of the transition (10) and forms the force introduction surface (14).

## Revendications

1. Éprouvette de traction en matériau composite renforcé par des fibres, comprenant :
une portion d'essai (2) qui comporte un matériau fibreux (3) disposé de manière rectiligne et une direction de charge de traction (4) prédéterminée pour un essai de matériau, la portion d'essai (2) étant parallèle à la direction de charge de traction (4) et
le matériau fibreux (3) comportant, dans la portion d'essai (2), des fibres qui s'étendent de manière unidirectionnelle dans la direction de charge de traction (4) ; et
une portion d'injection de force (5), le matériau fibreux (3) s'étendant dans la portion d'injection de force (5) au moins partiellement le long d'une surface (6) orientée obliquement par rapport à la direction de charge de traction (4).

2. Éprouvette de traction en matériau composite renforcé par des fibres selon la revendication 1,
**caractérisée en ce que**
la portion d'injection de force (5) comporte un insert (7) noyé dans le matériau fibreux (3).

3. Éprouvette de traction en matériau composite renforcé par des fibres selon la revendication 2,
**caractérisée en ce que**
l'insert (7) est en forme de coin, en particulier en forme de coin symétrique.

4. Éprouvette de traction en matériau composite renforcé par des fibres selon la revendication 2 ou 3,
**caractérisée en ce que**
l'insert (7) divise le matériau fibreux dans la région de la portion d'injection de force (5) en au moins deux brins (8, 9) qui s'étendent le long de différents côtés de l'insert (7).

5. Éprouvette de traction en matériau composite renforcé par des fibres selon l'une des revendications 2 à 4,
**caractérisée en ce que**
un applicateur extérieur (11), qui s'étend le long du matériau fibreux (3) sur son côté intérieur (12), est prévu dans la région d'une transition (10) allant de la portion d'essai (2) à la portion d'injection de force (5) et forme sur son côté extérieur (13) une surface d'injection de force (14) destinée à injecter une force d'un réceptacle d'éprouvette.

6. Éprouvette de traction en matériau composite renforcé par des fibres selon la revendication 5,
**caractérisée en ce que**
la surface d'injection de force (14) de l'applicateur (11) s'étend de la portion d'injection de force (5) au-delà la transition (10) en partie jusque dans la portion d'essai (2) et/ou se poursuit obliquement par rapport à la direction de charge de traction (4).

7. Éprouvette de traction en matériau composite renforcé par des fibres selon la revendication 5 ou 6,
**caractérisée en ce que**
un applicateur (11) est disposé des deux côtés de l'éprouvette de traction (1) et/ou la portion d'injection de force (5) réalise avec le ou les applicateurs (11) une forme de coin, en particulier une forme de coin symétrique.

8. Éprouvette de traction en matériau composite renforcé par des fibres selon l'une des revendications précédentes 5 à 7,
**caractérisée en ce que**
l'applicateur (11) contient un matériau amortisseur, en particulier un polymère amortisseur, de préférence du chlorure de polyvinyle ou du polyamide.

9. Procédé de fabrication d'une éprouvette de traction en matériau composite renforcé par des fibres selon l'une au moins des revendications précédentes, ledit procédé comprenant les étapes suivantes :
insérer un brin (8 ; 9) comportant un matériau fibreux (3) dans un outil de mise en forme (101, 102 ; 101', 102'), le matériau fibreux (3) étant formé d'une portion fibreuse rectiligne (103) dont le matériau fibreux est disposé de manière rectiligne et d'une portion fibreuse oblique (104) adjacente à la portion fibreuse rectiligne (103) et s'étendant obliquement par rapport à celle-ci ;
insérer un insert (7) qui définit une surface oblique (6) destinée à la portion fibreuse oblique (104) dans la région de la portion fibreuse oblique (104) ; et
faire durcir un matériau matriciel pour former un composant en matériau composite renforcé par des fibres (105) .

10. Procédé selon la revendication 9,
**caractérisé en ce que**
un premier brin (8) comportant un matériau fibreux (3) est inséré au niveau d'une première moitié d'outil (101 ; 101') de l'outil de mise en forme et un deuxième brin (9) comportant un matériau fibreux (3) est inséré au niveau d'une deuxième moitié d'outil (102 ; 102') de l'outil de mise en forme, l'insert (7) étant inséré entre le premier brin (8) et le deuxième brin (9).

11. Procédé selon la revendication 9 ou 10,
**caractérisé en ce que**
une étape de formation ou de fixation d'un applicateur extérieur (11) est prévue, l'applicateur étant disposé sur un côté extérieur du composant en matériau composite renforcé par des fibres (105) dans la région de la transition entre la portion fibreuse rectiligne (103) et la portion fibreuse oblique (104).

12. Dispositif (200) destiné à réaliser un essai de traction en combinaison avec :
une éprouvette de traction en matériau composite renforcé par des fibres (1) selon l'une des revendications 5 à 8, ledit dispositif comprenant :
un corps de réception d'éprouvette (201; 202) qui comporte une surface de transmission de force (203) destinée à injecter une force de traction dans la surface d'injection de force (14) de l'éprouvette de traction en matériau composite renforcé par des fibres (1) ;
le dispositif (200) présentant une direction d'essai en traction prédéterminée (204) par rapport à laquelle la surface de transmission de force (203) s'étend obliquement ; et
le corps de réception d'éprouvette (201 ; 202) étant conçu pour être plus long qu'une portion d'injection de force (5) de l'éprouvette de traction en matériau composite renforcé par des fibres (1) afin de soumettre l'éprouvette de traction en matériau composite renforcé par des fibres (1), dans la région d'une transition (10) entre la portion d'injection de force (5) et une portion d'essai (2), à une force normale (N) résultant de la force de traction (Z).

13. Dispositif selon la revendication 12,
**caractérisé en ce que**
le corps de réception d'échantillon (201 ; 202) est conçu pour transmettre une force à un applicateur (11) qui est fixé extérieurement à l'éprouvette de traction en matériau composite renforcé par des fibres (1) ou est formé sur celle-ci et qui se poursuit au-delà de la transition (10).

14. Procédé de réalisation d'un essai de traction, ledit procédé comprenant les étapes suivantes :
insérer une éprouvette de traction en matériau composite renforcé par des fibres (1) selon l'une des revendications 5 à 8 dans un dispositif (200) destiné à réaliser un essai de traction selon la revendication 12 ou 13 ;
appliquer une force de traction (Z) sur l'éprouvette de traction en matériau composite renforcé par des fibres (1) par le biais de surfaces de transmission de force (203) du dispositif (200) qui s'étendent obliquement par rapport à la direction d'essai en traction (204) et de surfaces d'injection de force correspondantes (14) de l'éprouvette de traction en matériau composite renforcé par des fibres (1) ; et
soutenir une force normale (N), résultant de la force de traction (Z) et agissant sur l'éprouvette de traction en matériau composite renforcé par des fibres (1), au moyen d'un insert (7) noyé dans l'éprouvette de traction en matériau composite renforcé par des fibres (1) dans la région d'une portion d'injection de force (5) .

15. Procédé selon la revendication 14,
**caractérisé en ce que**
une force normale (N) agissant sur l'éprouvette de traction en matériau composite renforcé par des fibres (1) est appliquée, notamment par le biais d'un applicateur (11) qui est prévu au niveau de la transition (10) extérieurement à l'éprouvette de traction en matériau composite renforcé par des fibres (1) et qui forme la surface d'injection de force (14), dans la région d'une extrémité effilée de l'insert (7), en particulier au niveau d'une transition (10) allant de la portion d'injection de force (5) à une portion d'essai (2) de l'éprouvette de traction en matériau composite renforcé par des fibres (1).
